# FASCICULE DE BREVET EUROPEEN

(11) **EP 4 172 000 B1**
(45) Date de publication et mention de la délivrance du brevet: **29.05.2024**
(21) Numéro de dépôt: 21740604.0
(22) Date de dépôt: 22.06.2021
(51) Int. Cl.: B60R 11/00

(54) **ENSEMBLE POUR LA FIXATION D'UN APPAREIL ÉLECTRONIQUE PORTATIF DANS UN VÉHICULE AUTOMOBILE**
ANORDNUNG ZUR BEFESTIGUNG EINES TRAGBAREN ELEKTRONISCHEN GERÄTS AN EINEM KRAFTFAHRZEUG
ASSEMBLY FOR ATTACHING A PORTABLE ELECTRONIC DEVICE TO A MOTOR VEHICLE

(30) Priorité: 29.06.2020 FR 2006820
(43) Date de publication de la demande: 03.05.2023
(73) Titulaire: Stellantis Auto SAS, 78300 Poissy (FR)
(72) Inventeur: PORET, Benoit, 78117 CHATEAUFORT (FR); LE FLOCH, Frederic, 78000 VERSAILLES (FR); HERMEN, Frederic, 25200 MONTBELIARD (FR)
(86) Numéro de dépôt international: PCT/FR2021/051138
(87) Numéro de publication internationale: WO 2022/003272

(56) Documents cités:
- DE-U1-202018 103 407
- FR-A1- 3 021 931
- FR-A1- 3 056 504
- JP-A- 2008 296 637

## Description

La présente invention concerne un ensemble pour la fixation d'un appareil électronique portatif sur une planche de bord d'un véhicule automobile, et le véhicule automobile comprenant ledit ensemble. La présente invention concerne également une coque pour la fixation d'un appareil électronique portatif et un dispositif de support d'une telle coque.

L'utilisation d'appareils électroniques portatifs, comme par exemple des tablettes numériques et/ou des smartphones, est aujourd'hui généralisée. Dès lors, dans un véhicule automobile, il est intéressant que ces appareils puissent être utilisés avec sécurité et de manière confortable, notamment pour le passager avant du véhicule.

Le document FR 3 056 504 décrit un dispositif de support pour appareil électronique portatif sur une planche de bord d'un véhicule automobile. Un évidement est aménagé dans la partie supérieure de la planche de bord, et reçoit un cadre support mobile, escamotable entre une position rangée dans l'évidement et une position d'utilisation où le cadre support est déployé en dehors de l'évidement de sorte à présenter une zone pouvant accueillir l'appareil électronique. En cas de déclenchement du coussin de sécurité gonflable côté passager, le caractère escamotable du cadre support lui permet de se replier automatiquement dans l'évidement.

Le dispositif de support permet ainsi au passager avant du véhicule de poser un appareil électronique portatif sur la planche de bord tout en se trouvant dans un véhicule répondant aux normes de sécurité.

Les documents DE202018103407, JP2008296637 et FR3021931 décrivent des dispositif de support d'appareil électronique comprenant une coque se fixant sur un support, le document DE202018103407 correspondant au préambule de la revendication 1.

Malheureusement, il a été constaté que lors du roulage du véhicule, les vibrations générées sont transmises à l'appareil électronique portatif par le biais de son dispositif de support ce qui peut poser des problèmes de lisibilité des contenus présentés et donc altérer le confort du passager dans son utilisation de l'appareil. Il y a donc un besoin d'amélioration de la situation. Par ailleurs, cette configuration implique une implantation du coussin gonflable de sécurité en partie inférieure de la planche de bord, au détriment de l'espace de rangement qui s'y trouve habituellement. Un compartiment de rangement est prévu en partie supérieure mais le volume de rangement proposé reste limité.

L'invention a pour objectif d'améliorer la situation antérieure. En particulier, l'invention cherche à trouver un système qui puisse permettre au passager avant du véhicule d'utiliser son appareil électronique en toute sécurité avec un confort amélioré, par exemple en ce qu'il est moins sujet à des vibrations.

A cet effet, et selon un premier aspect, l'invention a pour objet une coque selon la revendication 1 pour la fixation d'un appareil électronique portatif dans un véhicule automobile et, selon un second aspect, un ensemble selon la revendication 2, ensemble comprenant une telle coque et un support.

Comme on l'aura compris à la lecture de la définition qui vient d'en être donnée, l'invention propose un ensemble pour la fixation d'un appareil électronique portatif dans un véhicule automobile qui comprend un dispositif de support avec une platine de fixation qui s'insère dans le logement d'une coque destinée à recevoir ledit appareil. La platine de fixation permet ainsi de stabiliser l'appareil électronique portatif par une fixation solide de la coque, et donc de limiter voire d'éviter les phénomènes vibratoires altérant le confort de l'utilisateur lors du roulage du véhicule. La platine de fixation permet de s'affranchir des problèmes de vibrations en apportant de la rigidité à l'ensemble et un arrimage solide de l'appareil électronique portatif, par exemple à la planche de bord du véhicule, de préférence à la traverse de planche de bord. L'utilisateur, en particulier le passager avant du véhicule, peut ainsi profiter pleinement de son appareil électronique portatif en toute sécurité.

La présence d'un système encoche-crochet entre la platine de fixation du dispositif de support et le dispositif de fixation de la coque permet d'insérer la coque sur le dispositif de support tout en assurant le blocage de la coque en position. Aucun outil n'est donc nécessaire pour s'assurer du montage de la coque sur le dispositif de support, ce qui le simplifie pour l'utilisateur.

De préférence, en position de verrouillage le ou les crochets s'étendent au moins en partie dans le logement.

De manière avantageuse, la coque comprend au moins une paire de crochets formant une mâchoire et la platine de fixation comprend au moins une paire d'encoches. La présence d'au moins deux crochets permet de renforcer la stabilité de l'ensemble pour la fixation de l'appareil électronique.

De manière préférentielle, au moins une encoche a une forme en V ; plus préférentiellement toutes les encoches ont une forme en V.

Le fait que les crochets soient mobiles selon un axe de rotation rend plus simple la pose de la coque sur la platine de fixation car les crochets peuvent ainsi se positionner d'eux-mêmes dans la position de verrouillage lors de l'insertion de la coque.

De préférence, le dispositif de fixation comprend au moins une paire de crochets et les crochets d'une même paire de crochets montrent chacun un engrenage, l'engrenage d'un crochet s'engrenant avec l'engrenage de l'autre crochet de sorte à ce que les crochets soient entraînés en rotation autour de leurs axes de rotation respectifs selon des sens de rotation différents. L'engrènement des crochets entre eux permet de synchroniser leurs mouvements respectifs. Cette synchronisation facilite le centrage de la coque sur la platine de fixation et rend l'ensemble plus facile à manipuler pour l'utilisateur.

Avantageusement, au moins un crochet est configuré pour pénétrer une encoche lorsqu'il est en position de verrouillage et ledit au moins un crochet comprend une surface plane de contact destinée à coopérer avec une surface plane complémentaire de ladite encoche en vue de la retenue de la coque sur la platine de fixation. De préférence, au moins un crochet est fixé à la coque par une liaison pivot de sorte à se déplacer selon un arc de cercle, et la surface plane de contact du crochet est configurée pour former une tangente audit arc de cercle ; et/ou la surface du crochet opposée à la surface plane de contact montre une forme arrondie. On comprend que le crochet montre préférentiellement à son extrémité une forme sensiblement en V avec un coté plat et un côté arrondi, particulièrement adapté à coopérer avec une encoche en forme de V montrée par la platine de fixation.

Le fait que la surface plane de contact du crochet soit configurée pour former une tangente à un arc de cercle décrivant la rotation du crochet autour de son axe de rotation est avantageux en ce que l'effort de contact passe alors par le centre de rotation du crochet. Ceci permet d'éviter un déblocage intempestif du crochet, qui ne tourne pas du fait de l'effort de retenue appliqué.

A l'inverse, la forme arrondie de la surface opposée est utile pour favoriser une ouverture des crochets automatiquement par glissement de la forme arrondie sur un bord ou un coin de la platine de fixation lors de l'insertion de la platine de fixation dans le logement de la coque. En effet, selon l'invention l'insertion de la platine de fixation dans le logement se fait par translation sur le fond dudit logement. Les crochets vont s'écarter jusqu'au moment où ils parviennent au niveau des encoches, qu'ils peuvent alors pénétrer en vue du verrouillage du dispositif de fixation. L'invention est remarquable en ce qu'il suffit à l'utilisateur de mettre en position la coque sur la platine de fixation pour que ledit dispositif de fixation puisse se verrouiller. Lorsque les crochets sont associés à des moyens de rappel élastique, ce verrouillage se fait automatiquement, sans nécessiter d'action de la part de l'utilisateur.

De manière préférentielle, la platine de fixation du dispositif de support montre une forme trapézoïdale avec deux côtés non parallèles et deux bases, les deux bases étant étagées selon la direction verticale. De préférence, la plus petite base est disposée supérieure à l'autre base ; et/ou au moins une encoche est creusée dans un des côtés non-parallèles ; et/ou la platine forme un trapèze isocèle et/ou la platine est inclinée par rapport à la verticale. La forme trapézoïdale de la platine du dispositif de support permet de guider l'insertion de la coque sur ladite platine. Par ailleurs, la forme trapézoïdale permet d'absorber les dispersions de taille entre la coque et la platine de fixation. En particulier lorsque la surface de contact des encoches et des crochets montre un angle avec l'horizontale, par exemple lorsque l'encoche a une forme en V, le contact autobloquant entre l'encoche et le crochet est garanti.

Avantageusement, au moins un crochet est associé à des moyens élastiques de rappel configurés pour ramener automatiquement ledit crochet depuis sa position d'ouverture vers sa position de verrouillage. Les moyens élastiques de rappel, par exemple au moins un ressort, permettent au dispositif de support de caler la coque lorsque celle-ci est insérée sur la platine de fixation. La force générée par ces moyens élastiques contribue à la stabilisation de la coque lors du roulage du véhicule et empêche dans une moindre mesure la désolidarisation de la coque dans le cas d'un choc plus important.

Avantageusement encore, au moins un crochet est associé à au moins une butée destinée à limiter son déplacement et définir une position de verrouillage maximale et/ou une position d'ouverture maximale.

Avantageusement, au moins un crochet de la coque comprend un moyen de préhension apte à être manipulé par un utilisateur en vue du déplacement du crochet entre ses positions d'ouverture et de verrouillage. De préférence, la coque montrant une paroi arrière et des parois latérales, au moins un moyen de préhension est accessible depuis la paroi arrière de la coque et/ou au moins un moyen de préhension est accessible depuis une des parois latérales de la coque. Le moyen de préhension présent sur le ou les crochets la coque permet à l'utilisateur de faire passer le ou les crochets dans la position d'ouverture de façon à récupérer la coque recevant l'appareil électronique portatif.

Selon un troisième aspect, l'invention a pour objet un véhicule automobile remarquable en ce qu'il comprend un ensemble selon le second aspect.

De manière avantageuse, le véhicule comprend en outre une planche de bord et ledit dispositif de support est escamotable dans ladite planche de bord, et/ou le dispositif de support est mobile entre une position déployée et une position escamotée ; de préférence, le dispositif de support est mobile par translation le long d'un système de glissière.

De manière avantageuse, la planche de bord comprenant une traverse de planche de bord, le dispositif de support est fixé à la traverse de planche de bord. Par exemple, le dispositif de support est fixé à la traverse de planche de bord par son système de glissière. Cette configuration est avantageuse en ce qu'elle offre un arrimage solide du dispositif de support. Par exemple, le dispositif de support montre une résistance à l'arrachement d'au moins 30 daN, de préférence d'au moins 40 daN.

L'invention sera bien comprise et d'autres aspects et avantages apparaîtront clairement à la lecture de la description qui suit donnée en référence à la planche de dessins annexée sur laquelle :
[Fig. 1] La figure 1 est une vue de la planche de bord d'un véhicule automobile côté passager.
[Fig. 2] La figure 2 est une vue de l'ensemble pour la fixation d'un appareil électronique portatif dans un véhicule automobile selon l'invention.
[Fig. 3] La figure 3 est une vue de la coque pour la fixation d'un appareil électronique portatif selon un mode de réalisation de l'invention.
[Fig. 4] La figure 4 est une vue de la position de verrouillage des crochets de la coque dans un cas de dispersion de positionnement selon un mode de réalisation de l'invention.
[Fig. 5] La figure 5 est une vue d'un crochet en position de verrouillage selon un mode de réalisation de l'invention.
[Fig. 6] La figure 6 est une vue de la coque et du dispositif de fixation selon un mode de réalisation de l'invention.
[Fig. 7] La figure 7 est une vue de la paroi arrière de la coque selon un mode de réalisation de l'invention.

Dans la description qui suit, le terme « comprendre » est synonyme de « inclure » et n'est pas limitatif en ce qu'il autorise la présence d'autres éléments ou moyens dans la coque d'un appareil électronique portatif, le dispositif de support d'une telle coque ou l'ensemble de fixation d'un appareil électronique portatif auquel il se rapporte. Il est entendu que le terme « comprendre » inclut les termes « consister en ». Sur les différentes figures, les mêmes références désignent des éléments identiques ou similaires.

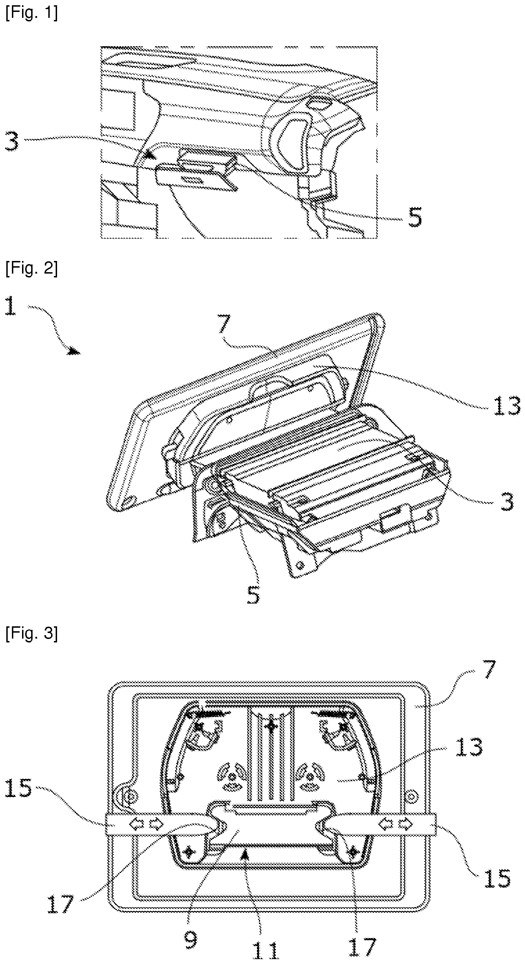

La figure 1 montre le côté passager d'une planche de bord d'un véhicule automobile. Un dispositif de support 3 escamotable pour une coque d'un appareil électronique portatif y est représenté en position déployée. Le dispositif de support 3 est par exemple placé au-dessus du rangement de vide-poche d'un véhicule. Ce dispositif de support 3 fait partie d'un ensemble pour la fixation d'un appareil électronique portatif, par exemple une tablette numérique ou un smartphone, dans un véhicule automobile. Cet ensemble 1 est intégralement représenté à la figure 2 et comprend, outre le dispositif de support 3, une coque 7 destinée à recevoir ledit appareil électronique (non-représenté).

La fixation d'un tel ensemble 1 sur la planche de bord d'un véhicule automobile permet de réduire considérablement les vibrations.

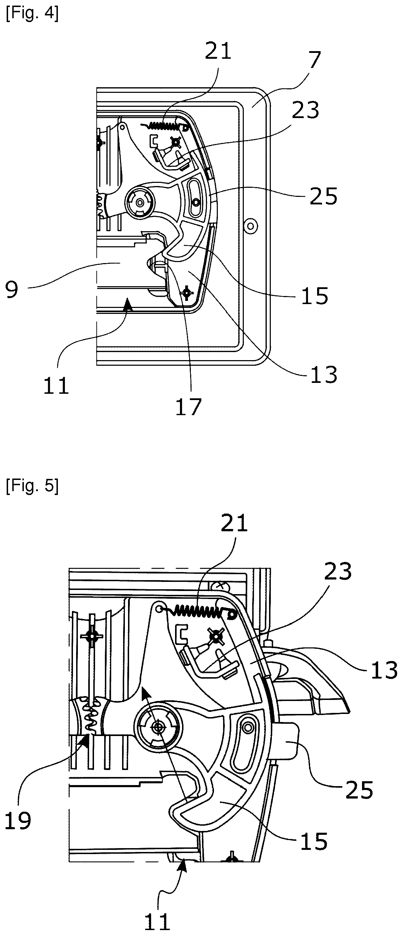

Comme visible sur les figures 1 et 2, le dispositif de support 3 est préférentiellement télescopique. A cet effet, le dispositif de support 3 comprend système de glissière 5 et peut être en partie mobile par translation le long d'au moins une glissière. Ainsi, lorsque le passager ne se sert pas d'un appareil électronique portatif, il est possible d'escamoter le dispositif de support 3 dans un évidement de la planche de bord, ce qui permet d'éviter que des éléments soient disposés en saillie de la planche de bord. Par exemple, le rangement du dispositif de support peut se faire par pression pour son escamotage. Son déploiement peut se faire par pression sur son élément de façade associé. L'élément de façade est avantageusement monté pivotant de manière à dégager la platine de fixation 9 du dispositif de support 3 (visible par exemple sur les figures 3 et 4), de préférence autour d'un axe horizontal agencé sous la platine de fixation 9.

Le dispositif de support 3 et la coque 7 destinée à recevoir l'appareil électronique portatif sont réalisés en matériau plastique, par exemple en matériau élastomère tel que l'éthylène-propylène-diène monomère (EPDM).

Le dispositif de support 3 comprend par ailleurs une platine de fixation 9 tandis que la coque 7 comprend un logement 11 configuré pour recevoir ladite platine de fixation 9 en vue de la fixation réversible de la coque 7 sur le dispositif de support 3.

Afin de caler la coque 7 sur le dispositif de support 3, la coque 7 comprend un dispositif de fixation 13 avec au moins un crochet 15 qui coopère avec au moins une encoche 17 découpée sur un des bords de la platine de fixation 9. Préférentiellement, la coque 7 comprend deux crochets 15 et la platine de fixation 9 comprend deux encoches 17 correspondantes.

Le dispositif de fixation 13, également réalisé en matériau plastique, par exemple en matériau élastomère tel que l'éthylène-propylène-diène monomère (EPDM), peut être rapporté à la coque 7 ou être venu de matière avec celle-ci.

De manière préférentielle, la coque 7 montre une paroi arrière et le logement 11 est formé dans la paroi arrière de la coque 7.

Dans le mode de réalisation montré à la figure 3 qui ne fait pas partie de l'invention, le ou les crochets 15 sont des languettes qui sont mobiles entre une position d'ouverture et une position de verrouillage. La figure 3 montre la platine 9 de fixation du dispositif de support 3 insérée dans le logement 11 de la coque 7. Les autres éléments du dispositif de support 3 ne sont pas représentés pour des raisons de clarté et de lisibilité de la figure. Sur la figure 3 une paire de crochets 15 est en partie engagée dans une paire d'encoches 17 de la platine 9 de fixation. La position est une position intermédiaire qui peut déjà être une position de verrouillage. Un mouvement de translation des crochets est nécessaire afin de libérer les crochets 15.

Selon un mode de réalisation correspondant à l'invention et montré aux figures 4 à 8, au moins un crochet 15 est fixé à la coque 7 par une liaison pivot se sorte à se déplacer selon un arc de cercle. Conformément à l'invention, le ou les crochets 15 du dispositif de fixation 13 sont fixés chacun par une liaison pivot autour d'un axe de rotation perpendiculaire à la paroi arrière de la coque 7.

Les crochets, montrant une forme arrondie, sont ainsi mobiles entre une position d'ouverture et une position de verrouillage. Dans la position d'ouverture (non représentée) les crochets ne sont pas insérés dans les encoches et sont placés en retrait du logement. Dans la position de verrouillage représentée en figures 4 et 5, les extrémités des crochets 15 sont au moins en partie insérés dans les encoches 17. On notera que la forme trapézoïdale de la platine de fixation 9 permet d'absorber des dispersions de dimensionnement. Par exemple en figure 5 les extrémités des crochets 15 pénètrent dans les encoches 17 jusqu'à en toucher le fond. Cette position correspond à la position nominale de verrouillage des crochets 15 dans les encoches. La figure 4 montre une situation dans laquelle malgré une dispersion maximale, la position de verrouillage est atteinte avec une faible pénétration des crochets 15 dans les encoches 17. Plus particulièrement, on notera que la position de verrouillage est atteinte lorsque le ou les crochets 15 montrent une surface de contact coopérant avec la surface plane complémentaire de la ou des encoches 17. La surface de contact permet ainsi à l'encoche 17 de retenir le crochet 15.

De préférence, la surface de contact d'un crochet 15 est agencée tangentiellement par rapport à l'arc de cercle formé lors du déplacement dudit crochet 15 de sorte à empêcher toute rotation intempestive de ce crochet 15 lors des différentes manipulations de la coque 7 par l'utilisateur. A ce titre, la figure 5 montre la normale à la surface de contact qui passe par l'axe de rotation du crochet 15.

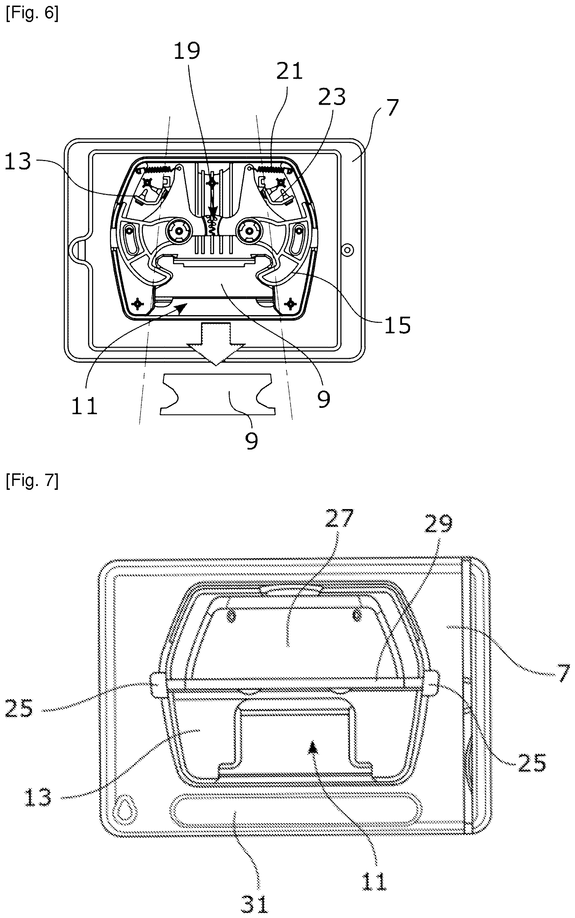

Dans la configuration préférée, illustrée en figure 6, et afin de renforcer le maintien de la coque 7 sur le dispositif de support, la coque 7 comprend au moins une paire de crochets 15 formant une mâchoire et la platine de fixation 9 comprend au moins une paire d'encoches 17. La paire de crochets 15 permet ainsi de saisir la platine de fixation 9 et donc de maintenir la coque 7 dans une position stable lorsque la paire de crochets 15 est en position de verrouillage.

La présence d'une paire de crochets 15 associée à un arrimage du dispositif de support à la traverse de la planche de bord du véhicule permet à l'ensemble de résister à l'arrachement lorsqu'une force d'environ 40 daN est exercée sur la coque.

Lorsque deux crochets 15 forment la mâchoire de la coque 7, il est préférable que chacun des crochets montrent un engrenage 19. Comme montré à la figure 6, les deux crochets 15 sont engrenés entre eux grâce à cet engrenage 19, ce qui permet d'entraîner les crochets en rotation autour de leurs axes de rotation respectifs selon des sens de rotation différents. Cela permet aux deux crochets 15 de se déplacer en même temps entre les positions d'ouverture et de verrouillage et dès lors de renforcer l'emprise des crochets 15 sur la platine de fixation 9 du dispositif de support.

Chaque crochet 15 peut par ailleurs être avantageusement précontraint par des moyens élastiques, par exemple au moins un ressort 21, de sorte à les ramener de manière automatique en position de verrouillage. Cette configuration permet d'une part d'éviter une ouverture intempestive des crochets 15 et d'autre part de verrouiller automatiquement le dispositif de fixation lors de l'insertion de la platine de fixation dans le logement. Les crochets 15 pénètrent automatiquement et dès que possible dans les encoches 17.

La figure 6 montre également que la platine de fixation 9 du dispositif de support est de forme trapézoïdale avec deux côtés non parallèles et deux bases étagées selon la direction verticale. Préférentiellement, la platine de fixation 9 forme un trapèze isocèle. La forme trapézoïdale permet à l'utilisateur de guider l'insertion de la coque 7, comme indiqué par la flèche représentée sur la figure 6, de manière à ce que la platine de fixation 9 soit retenue par les crochets 15 du dispositif de fixation 13 de la coque 7. Avantageusement, la plus petite base montrée par la forme trapézoïdale est disposée supérieure à l'autre base. Avantageusement encore, la ou les encoches 17 sont creusées ou découpées dans les côtés non-parallèles. On comprend que la coque est mise en place sur le dispositif de support par un mouvement de translation en direction du bas. Lors de cette translation la platine de fixation 9 est insérée dans son logement 11 et va écarter les crochets 15 en coopérant avec leur surface arrondie jusqu'à ce que les crochets 15 parviennent à hauteur des encoches 17 et s'y insèrent verrouillant l'ensemble.

La platine de fixation 9 peut préférentiellement être inclinée par rapport à la verticale de sorte à optimiser le confort d'utilisation.

Idéalement, au moins une butée 23 est associée à chaque crochet 15 afin de restreindre le déplacement du crochet entre une position de verrouillage nominale et une position d'ouverture maximale. La ou les butées 23 peuvent ainsi comprendre un premier dispositif agencé pour caler ledit crochet 15 lorsque celui-ci est en position de verrouillage nominale et un deuxième dispositif agencé pour caler ledit crochet 15 lorsque celui-ci est en position d'ouverture maximale. Typiquement, lesdits dispositifs sont formés par des reliefs créés dans le dispositif de fixation 13, par exemple lors d'une opération de moulage.

Préférentiellement, chaque crochet 15 présente un moyen de préhension 25 (référencé en figures 5 et 7) qui est utile pour que l'utilisateur puisse ramener ledit crochet 15 dans une position d'ouverture et ainsi récupérer la coque 7 recevant l'appareil électronique portatif. Le moyen de préhension 25 est avantageusement accessible depuis la paroi arrière de la coque 7 et/ou depuis l'une des parois latérales de la coque 7.

Comme montré sur la figure 7, un pied rabattable 27, par exemple fixé autour d'un axe de rotation 29 s'étendant entre les parois latérales de la coque 7, peut se trouver sur la face externe de la paroi arrière de ladite coque 7, permettant ainsi à l'utilisateur de poser la coque 7 contenant l'appareil électronique portatif sur une surface plane, par exemple une table, hors du véhicule sans devoir enlever l'appareil électronique portatif de la coque 7. Un rebord 31 peut avantageusement être également agencé sur la face externe de la paroi arrière de la coque. Ce rebord 31 a par exemple pour fonction de coopérer avec l'élément de façade associé au dispositif de support pour le faire pivoter vers le bas lors de la mise en place de la coque 7 sur le dispositif de support. Avantageusement l'élément de façade est associé à des moyens élastiques qui le ramènent en position de masquage lorsque la coque est retirée du dispositif de support 3. Dans certaines configurations préférées, le pied rabattable 27 et le rebord 31 peuvent être tous les deux présents pour permettre à l'utilisateur d'utiliser l'appareil électronique portatif inséré dans la coque 7 avec le pied et/ou légèrement incliné dans une position essentiellement à plat.

La coque 7 est prévue pour recevoir un appareil électronique portatif avec un écran, tel qu'une tablette numérique ou un smartphone, au sein d'une cavité ouverte ou fermée du côté de l'écran de l'appareil portatif. La cavité et le logement de la coque sont préférentiellement séparés par une paroi. La coque peut comprendre un écran de confidentialité fermant la cavité et disposé en regard de l'écran de la tablette numérique ou du smartphone.

## Revendications

1. Coque (7) pour la fixation d'un appareil électronique portatif dans un véhicule automobile, la coque comprend une cavité destinée à recevoir un appareil électronique portatif avec un écran et un logement (11) configuré pour recevoir une platine (9) de fixation d'un dispositif de support (3) en vue de la fixation réversible de la coque (7) sur ledit dispositif de support (3) ; la coque (7) comprend en outre un dispositif de fixation (13) avec au moins un crochet (15) mobile entre une position d'ouverture et une position de verrouillage pour la fixation réversible de la coque (7) sur le dispositif de support (3) ; ledit crochet (15) étant destiné à coopérer avec une encoche (17) disposée sur la platine (9) ;
**caractérisé en ce que** le logement (11) est formé dans la paroi arrière de la coque (7) et **en ce que** le ou les crochets (15) du dispositif de fixation (13) sont fixés chacun par une liaison pivot autour d'un axe de rotation perpendiculaire à ladite paroi arrière ; de préférence, le dispositif de fixation (13) comprend au moins une paire de crochets (15) et les crochets (15) d'une même paire de crochets montrent chacun un engrenage (19), l'engrenage d'un crochet s'engrenant avec l'engrenage de l'autre crochet de sorte à ce que les crochets (15) soient entraînés en rotation autour de leurs axes de rotation respectifs selon des sens de rotation différents.

2. Ensemble (1) pour la fixation d'un appareil électronique portatif dans un véhicule automobile, l'ensemble (1) comprend un dispositif de support (3) et une coque (7) destinée à recevoir l'appareil électronique portatif, le dispositif de support (3) comprend une platine (9) de fixation et la coque (7) comprend un logement (11) configuré pour recevoir ladite platine (9) de fixation en vue de la fixation réversible de la coque (7) sur le dispositif de support (3), la platine (9) de fixation comprend au moins une encoche (17), **caractérisé en ce que** la coque (7) est suivant la revendication 1, le ou les crochets (15) étant agencés pour la fixation réversible de la coque (7) sur le dispositif de support (3) par coopération entre ledit crochet (15) et ladite encoche (17).

3. Ensemble (1) selon la revendication 2 4- **caractérisé en ce qu'**au moins un crochet (15) est configuré pour pénétrer une encoche (17) lorsqu'il est en position de verrouillage et **en ce que** ledit au moins un crochet (15) comprend une surface plane de contact destinée à coopérer avec une surface plane complémentaire de ladite encoche (17) en vue de la retenue de la coque (7) sur la platine (9) de fixation ; de préférence, au moins un crochet (15) est fixé à la coque (7) par une liaison pivot de sorte à se déplacer selon un arc de cercle, et la surface plane de contact du crochet est configurée pour former une tangente audit arc de cercle ; et/ou la surface du crochet opposée à la surface plane de contact montre une forme arrondie.

4. Ensemble (1) selon l'une des revendications 2 à 3, **caractérisé en ce que** la platine (9) de fixation du dispositif de support (3) montre une forme trapézoïdale avec deux côtés non parallèles et deux bases, les deux bases étant étagées selon la direction verticale ; de préférence, au moins une encoche (17) est creusée dans un des côtés non-parallèles.

5. Ensemble (1) selon l'une des revendications 2 à 4, **caractérisé en ce qu'**au moins un crochet (15) est associé à des moyens élastiques (21) de rappel configurés pour ramener automatiquement ledit crochet (15) depuis sa position d'ouverture vers sa position de verrouillage.

6. Ensemble (1) selon l'une des revendications 2 à 5, **caractérisé en ce qu'**au moins un crochet (15) de la coque comprend un moyen de préhension (25) apte à être manipulé par un utilisateur en vue du déplacement du crochet (15) entre ses positions d'ouverture et de verrouillage ; de préférence, la coque (7) montrant une paroi arrière et des parois latérales, au moins un moyen de préhension (25) est accessible depuis la paroi arrière de la coque (7) et/ou au moins un moyen de préhension (25) est accessible depuis une des parois latérales de la coque (7).

7. Véhicule automobile **caractérisé en ce qu'**il comprend un ensemble (1) selon l'une des revendications 2 à 6; de préférence, le véhicule comprend en outre une planche de bord et ledit dispositif de support (3) est escamotable dans ladite planche de bord, et/ou la planche de bord comprenant une traverse de planche de bord, le dispositif de support (3) est fixé à la traverse de planche de bord.

## Patentansprüche

1. Schale (7) zur Befestigung eines tragbaren elektronischen Gerätes in einem Kraftfahrzeug, wobei die Schale einen Hohlraum zur Aufnahme eines tragbaren elektronischen Gerätes mit einem Bildschirm und eine Aufnahme (11) aufweist, die zur Aufnahme einer Befestigungsplatine (9) einer Trägervorrichtung (3) zur reversiblen Befestigung der Schale (7) an der Trägervorrichtung (3) ausgebildet ist; die Schale (7) ferner eine Befestigungsvorrichtung (13) mit mindestens einem Haken (15) aufweist, der zwischen einer Öffnungsposition und einer Verriegelungsposition zur reversiblen Befestigung der Schale (7) an der Trägervorrichtung (3) bewegbar ist; Keil (15) zum Zusammenwirken mit einer an der Platine (9) angeordneten Kerbe (17);
**dadurch gekennzeichnet, dass** die Aufnahme (11) in der Rückwand der Schale (7) ausgebildet ist und dass der oder die Haken (15) der Befestigungsvorrichtung (13) jeweils durch eine Schwenkverbindung um eine senkrecht zur Rückwand verlaufende Drehachse befestigt sind; vorzugsweise umfasst die Befestigungsvorrichtung (13) mindestens ein Hakenpaar (15) und die Haken (15) ein und desselben Hakenpaares jeweils ein Zahnrad (19) aufweisen, wobei das Zahnrad eines Hakens mit dem Zahnrad des anderen kämmt Haken, sodass die Haken (15) um ihre jeweiligen Drehachsen in unterschiedlichen Drehrichtungen gedreht werden.

2. Anordnung (1) zur Befestigung eines tragbaren elektronischen Geräts in einem Kraftfahrzeug, wobei die Anordnung (1) eine Haltevorrichtung (3) und eine Hülle (7) zur Aufnahme des tragbaren elektronischen Geräts umfasst, die Haltevorrichtung (3) eine Halteplatte (9) umfasst und die Hülle (7) eine Aufnahme (11) umfasst, die zur Aufnahme der Halteplatte (9) zur reversiblen Befestigung der Hülle (7) an der Haltevorrichtung (3) konfiguriert ist, die Halteplatte (9) mindestens eine Kerbe (17) umfasst, **dadurch gekennzeichnet, dass** die Hülle (7) nach Anspruch 1 ist oder die Haken (15) zur reversiblen Befestigung der Schale (7) an der Trägervorrichtung (3) durch Zusammenwirken des Hakens (15) und der Kerbe (17) angeordnet sind.

3. Anordnung (1) nach Anspruch 2, **dadurch gekennzeichnet, dass** mindestens ein Haken (15) so konfiguriert ist, dass er in eine Kerbe (17) eingreift, wenn er sich in der Verriegelungsposition befindet, und dass der mindestens eine Haken (15) eine ebene Kontaktfläche umfasst, die mit einer komplementären ebenen Fläche der Kerbe (17) zusammenwirkt, um die Schale (7) auf der Befestigungsplatte (9) zu halten; vorzugsweise ist mindestens ein Haken (15) an der Schale (7) durch eine Drehverbindung befestigt, um sich in einem Kreisbogen zu bewegen, und die ebene Fläche Der Hakenkontakt ist so konfiguriert, dass er eine Tangente zu dem Kreisbogen bildet, und/oder die der ebenen Kontaktfläche gegenüberliegende Hakenoberfläche eine abgerundete Form aufweist.

4. Anordnung (1) nach einem der Ansprüche 2 bis 3, **dadurch gekennzeichnet, dass** die Befestigungsplatine (9) der Trägervorrichtung (3) eine Trapezform mit zwei nicht parallelen Seiten und zwei Basen aufweist, wobei die beiden Basen in vertikaler Richtung abgestuft sind; vorzugsweise ist in einer der nicht parallelen Seiten mindestens eine Kerbe (17) ausgehöhlt.

5. Einheit (1) nach einem der Ansprüche 2 bis 4, **dadurch gekennzeichnet, dass** mindestens ein Haken (15) elastischen Rückholmitteln (21) zugeordnet ist, die so konfiguriert sind, dass sie den Haken (15) automatisch von seiner Öffnungsstellung in seine Verriegelungsstellung zurückbringen.

6. Anordnung (1) nach einem der Ansprüche 2 bis 5, **dadurch gekennzeichnet, dass** mindestens ein Haken (15) der Schale ein Greifmittel (25) umfasst, das von einem Benutzer betätigt werden kann, um den Haken (15) zwischen seiner Öffnungs- und seiner Verriegelungsposition zu bewegen; wobei vorzugsweise die Schale (7) eine Rückwand und Seitenwände aufweist, mindestens ein Greifmittel (25) von der Rückwand der Schale (7) aus zugänglich ist und/oder mindestens ein Greifmittel (25) von einer der Seitenwände der Schale (7) aus zugänglich ist.

7. Kraftfahrzeug, **dadurch gekennzeichnet, dass** es eine Anordnung (1) nach einem der Ansprüche 2 bis 6 umfasst; vorzugsweise umfasst das Fahrzeug ferner ein Armaturenbrett und die Stützvorrichtung (3) ist in das Armaturenbrett einziehbar, und/oder das Armaturenbrett umfasst einen Armaturenbrettquerträger, wobei die Stützvorrichtung (3) an dem Armaturenbrettquerträger befestigt ist.

## Claims

1. Hull (7) for fixing a portable electronic device in a motor vehicle, the hull comprises a cavity for receiving a portable electronic device with a screen and a housing (11) configured to receive a mounting plate (9) of a support device (3) for the reversible fixing of the hull (7) to said support device (3); the hull (7) further comprises a fixing device (13) with at least one hook (15) movable between an open position and a locking position for the reversible fixing of the hull (7) to the support device (3); said hook (1) 5) being intended to cooperate with a notch (17) arranged on the plate (9);
**characterized in that** the housing (11) is formed in the rear wall of the shell (7) and **in that** the hook or hooks (15) of the fixing device (13) are each fixed by a pivot connection about an axis of rotation perpendicular to said rear wall; preferably, the fixing device (13) comprises at least one pair of hooks (15) and the hooks (15) of the same pair of hooks each show a gear (19), the gear of one hook meshing with the gear of the other hook so as to the hooks (15) are driven in rotation about their respective axes of rotation in different directions of rotation.

2. Assembly (1) for fixing a portable electronic apparatus in a motor vehicle, the assembly (1) comprises a support device (3) and a shell (7) intended to receive the portable electronic apparatus, the support device (3) comprises a fixing plate (9) and the shell (7) comprises a housing (11) configured to receive said fixing plate (9) with a view to the reversible fixing of the shell (7) on the support device (3), the fixing plate (9) comprises at least one notch (17), **characterized in that** the shell (7) is according to claim 1, the hook or hooks (7) 15) being arranged for the reversible attachment of the shell (7) to the support device (3) by cooperation between said hook (15) and said notch (17).

3. Assembly (1) according to claim 2, **characterized in that** at least one hook (15) is configured to penetrate a notch (17) when it is in the locking position and **in that** the said at least one hook (15) comprises a flat contact surface intended to cooperate with a complementary flat surface of the said notch (17) with a view to retaining the shell (7) on the fixing plate (9); preferably, at least one hook (15) is fixed to the shell (7) by a pivot connection so as to move along an arc of a circle, and the flat contact surface of the hook is configured for form a tangent to said arc of a circle; and/or the surface of the hook opposite the flat contact surface shows a rounded shape.

4. Assembly (1) according to one of claims 2 to 3, **characterized in that** the mounting plate (9) of the support device (3) has a trapezoidal shape with two non-parallel sides and two bases, the two bases being stepped in the vertical direction; preferably, at least one notch (17) is hollowed out in one of the non-parallel sides.

5. Assembly (1) according to one of claims 2 to 4, **characterized in that** at least one hook (15) is associated with elastic return means (21) configured to return said hook (15) automatically from its open position to its locked position.

6. Assembly (1) according to one of claims 2 to 5, **characterized in that** at least one hook (15) of the shell comprises a gripping means (25) capable of being manipulated by a user with a view to the displacement of the hook (15) between its open and locked positions; preferably, the shell (7) showing a rear wall and side walls, at least one gripping means (25) is accessible from the rear wall of the shell (7) and/or at least one gripping means (25) is accessible from one of the side walls of the shell (7).

7. Motor vehicle, **characterized in that** it comprises an assembly (1) according to one of claims 2 to 6; preferably, the vehicle further comprises a dashboard and said support device (3) is retractable in said dashboard, and/or the dashboard comprising a dashboard cross-member, the support device (3) is fixed to the dashboard cross-member.
